# EUROPÄISCHE PATENTSCHRIFT

(11) **EP 0 933 547 B1**
(45) Veröffentlichungstag und Bekanntmachung des Hinweises auf die Patenterteilung: **23.04.2003**
(21) Anmeldenummer: 98121112.1
(22) Anmeldetag: 09.11.1998
(51) Int. Cl.: F16D 23/06

(54) **Gleichlaufvorrichtung mit einem Aussenkonus-Synchronring für ein schaltbares Getriebe**
Synchronising device with synchroniser ring having an external conical surface for speed-changing transmission
Dispositif de synchronisation avec bague de synchronisation comportant une surface extérieure conique pour boîte de vitesses

(30) Priorität: 15.12.1997 DE 19755613
(43) Veröffentlichungstag der Anmeldung: 04.08.1999
(73) Patentinhaber: Volkswagen Aktiengesellschaft, 38436 Wolfsburg (DE)
(72) Erfinder: Fricke, Horst, Dipl.-Ing., 38554 Weyhausen (DE); Sendzik, Klaus, Dipl.-Ing., 38104 Braunschweig (DE)

(56) Entgegenhaltungen:
- EP-A- 0 272 134
- FR-A- 1 225 661
- GB-A- 482 077
- US-A- 2 470 208
- US-A- 5 479 835

## Beschreibung

Die Erfindung betrifft eine Schaltungsanordnung mit Außenkonus-Synchronisierung für einen wahlweise schaltbaren Gang eines Getriebes, insbesondere eines Kraftfahrzeuges, mit einem Schaltrad, einem Synchronkörper und einer auf das Schaltrad aufschiebbaren und mit dem Synchronkörper über eine Verzahnung verbundene Schiebemuffe, wobei zum Synchronisieren zwischen dem Schaltrad und der Schiebemuffe ein Synchronring mit einer vorbestimmten Anzahl von Lappen und auf dem Schaltrad eine Synchronfeder zum Ausüben einer Vorsynchronisierungskraft auf eine Innenfläche der Lappen angeordnet sind, gemäß dem Oberbegriff des Anspruchs 1. Eine solche Anordnung is aus FR-A-1.225.661 bekannt.

Bei derartigen bekannten Schaltungsanordnungen sind die Innenflächen der Lappen schräg ausgebildet, so daß beim Ausrücken der Schaltmuffe eine Kraft durch die auf die schrägen Flächen wirkende Synchronfeder den Synchronring von dem Schaltrad weg drückt, der Synchronring also der Schaltmuffe in die Schaltausgangsstellung folgt. Diese Anordnung hat jedoch den Nachteil, daß nach Überwindung der ersten Schräge an den Synchronringlappen (Vorsynchronisierungskraft) eine weitere Axialkraft wirksam wird, die durch eine zweite Schräge an den Synchronringlappen entsteht. Diese Kraft wirkt über den gesamten weiteren Schaltweg. Nach erfolgter Hauptsynchronisierung, Gleichlauf zwischen Synchronring und Schiebemuffe hat dies zur Folge, daß vor dem Durchschalten der Schiebemuffe bei ungünsiger Stellung der Schiebemuffe zur Schaltradabdachung, der Synchronring entgegen der Drehrichtung geräumt werden muß. Die bei diesem Vorgang auf den Synchronring wirkende Kraft spürt man als zweiten Druckpunkt am Handschalthebel der Gangschaltvorrichtung. Dies wird von einer Bedienungsperson, wie beispielsweise einem Fahrer eines Kraftfahrzeuges beim Gangschalten, als störend und unkomfortabel empfunden. Ferner übt die Synchronfeder nach dem vollständigen Einrücken des Ganges ständig über die schrägen Innenflächen der Lappen auf den Synchronring und damit auf die Schiebemuffe eine Kraft in Ausrückrichtung aus und es kann durch diese Kraft zu einem unerwünschten Ausrücken des Ganges kommen.

Der vorliegenden Erfindung liegt daher die Aufgabe zugrunde, eine Schaltungsanordnung der obengenannten Art zur Verfügung zu stellen, wobei die obengenannten Nachteile überwunden werden.

Diese Aufgabe wird erfindungsgemäß durch eine Schaltungsanordnung der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß die jeweiligen Innenflächen der Lappen koaxial parallel zu einer Längsachse des Synchronringes ausgebildet sind und ferner ein Rückhaltemittel für die Synchronfeder zum Halten der Synchronfeder auf dem Schaltrad sowie ein Mitnahmemittel für den Synchronring zum Halten des Synchronringes an der Schiebemuffe angeordnet sind.

Dies hat den Vorteil, daß nach Ende eines Synchronisationsvorganges keine zusätzliche Kraftkomponente bzw. kein Sperrmoment mehr zum endgültigen Einlegen des Ganges beim vollständigen verschieben der Schiebemuffe auf eine Kupplungsverzahnung des Schaltrades mehr vorhanden ist, da die Innenflächen der Lappen achsparallel zu einer Längsachse des Synchronringes und damit der ganzen Anordnung ausgebildet sind. Gleichzeitig sorgen das Rückhaltemittel und das Mitnahmemittel für eine einwandfreie Funktion, da einerseits der Synchronring beim Zurückschieben, d.h. beim Herausnehmen des Ganges, nicht auf dem Schaltrad zurückbleibt und andererseits die Synchronfeder nicht durch den Synchronring vom Schaltrad abgezogen wird.

Eine zuverlässige Mitnahme des Synchronringes bei einer axialen Bewegung der Schiebemuffe wird dadurch gewährleistet, daß das Mitnahmemittel ein Mitnahmering ist, welcher schaltradseitig fest mit der Schiebemuffe verbunden ist und eine Ringfläche aufweist, welche schiebemuffenseitig an einem schaltradseitigen äußeren Rand des Synchronringes derart anschlägt, daß eine axiale Bewegungsfreiheit des Synchronringes zwischen der Ringfläche und der Schiebemuffe festgelegt ist.

Zweckmäßigerweise weist der Mitnahmering eine senkrecht zur Ringfläche verlaufende Außenfläche auf, welche mit einem Außenumfang der Schiebemuffe fest verbunden ist. Die feste Verbindung zwischen Außenfläche des Mitnahmeringes und Außenumfang der Schiebemuffe ist dabei vorzugsweise eine Nut-Kante-Verbindung ist, wobei eine Kante an der Außenfläche des Mitnahmeringes in eine Nut am Außenumfang der Schiebemuffe greift, oder eine Nut-Klemm-Verbindung ist, wobei ein Ende der Außenfläche des Mitnahmeringes klemmend in eine Nut am Außenumfang der Schiebemuffe gebogen ist.

In einer besonders bevorzugten Ausführungsform ist der Mitnahmering im Querschnitt L-förmig ausgebildet, wobei ein Schenkel die Ringfläche und ein Schenkel die Außenfläche des Mitnahmeringes ausbilden.

Eine zuverlässige Halterung der Synchronfeder auf dem Schaltrad erzielt man dadurch, daß das Rückhaltemittel für die Synchronfeder ein Haltering ist, wobei eine äußere Ringfläche des Halteringes einen Anschlag für die Synchronfeder in Richtung der Schiebemuffe derart ausbildet, daß eine axiale Bewegungsfreiheit der Synchronfeder zwischen der äußeren Ringfläche des Halteringes und dem Schaltrad festgelegt ist.

Zweckmäßigerweise ist die äußere Ringfläche senkrecht zu einer Längsachse des Halteringes ausgebildet und bevorzugt ist der Haltering schaltmuffenseitig fest mit dem Schaltrad verbunden.

Für eine einfache und zuverlässige Verbindung zwischen Haltering und Schaltrad weist der Haltering eine senkrecht zur äußeren Ringfläche verlaufende Innenfläche auf, welche mit einem Außenumfang des Schaltrades fest verbunden ist.

Dabei ist die feste Verbindung vorzugsweise eine Kante-Kante-Verbindung ist, wobei eine schiebemuffenseitige Endkante der Innenfläche des Halteringes in eine Kante an der Außenfläche des Schaltrades greift.

Eine drehfeste Anordnung des Halteringes an dem Schaltrad erzielt man dadurch, daß in einem vorbestimmten Abschnitt des Umfanges des Halteringes eine Erhebung ausgebildet ist, welche in einen Nut an der Außenfläche des Schaltrades greift.

Zweckmäßigerweise ist der Haltering im Querschnitt L-förmig ausgebildet, wobei ein Schenkel die äußere Ringfläche und ein Schenkel die Innenfläche des Halteringes ausbildet.

Für eine einerseits einfache und kostengünstige Ausgestaltung bei andererseits ausreichenden Synchronisationskräften weist der Synchronring drei Lappen auf.

In einer besonders bevorzugten Ausführungsform ist der wahlweise schaltbare Gang ein Rückwärtsgang.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine bevorzugte Ausführungsform einer erfindungsgemäßen Schaltungsanordnung in Schnittansicht,
- Fig. 2: eine Anordnung von Synchronring, Schiebemuffe und Synchronkörper gemäß der Ausführungsform von Fig. 1 in Schnittansicht,
- Fig. 3: eine Anordnung von Synchronring, Schiebemuffe und Synchronkörper gemäß einer zweiten bevorzugten Ausführungsform in Schnittansicht,
- Fig. 4: eine bevorzugte Ausführungsform eines Schaltrades für eine erfindungsgemäße Anordnung in Schnittansicht,
- Fig. 5: einen Synchronring für eine erfindungsgemäße Anordnung in Aufsicht,
- Fig. 6: einen Haltering für eine erfindungsgemäße Anordnung in Aufsicht,
- Fig. 7: den Haltering von Fig. 6 in einem Schnitt entlang Linie A-A von Fig. 6,
- Fig. 8: einen Mitnahmering für eine erfindungsgemäße Anordnung in Aufsicht und
- Fig. 9: den Mitnahmering von Fig. 8 in Schnittansicht.

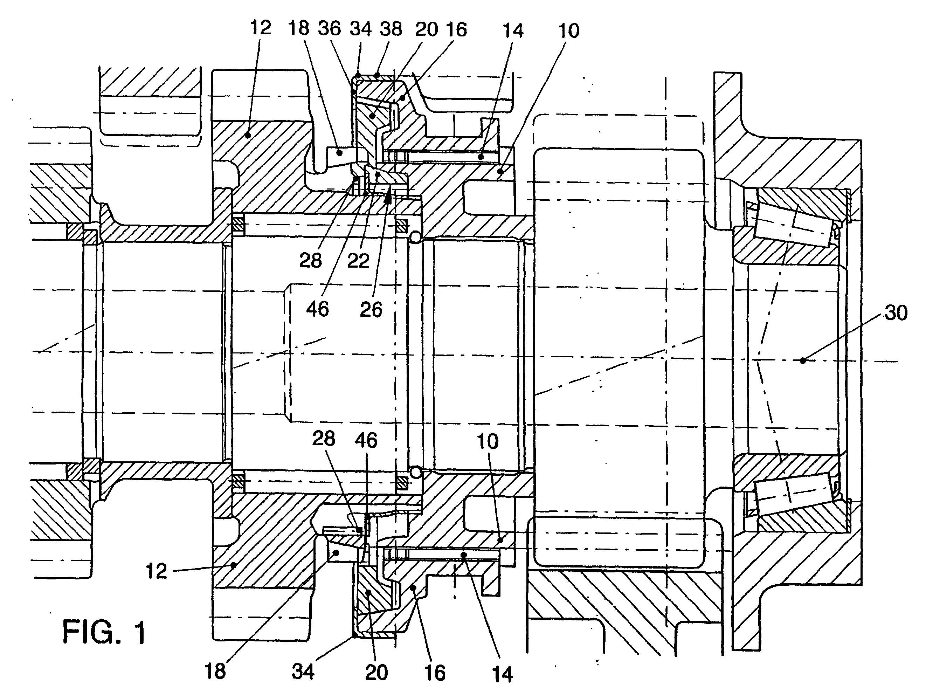

Die in Fig. 1 dargestellte bevorzugte Ausführungsform einer erfindungsgemäßen Schaltungsanordnung umfaßt einen Synchronkörper 10 und ein benachbartes, axial fluchtendes Schaltrad 12. Über eine Verzahnung 14 ist der Synchronkörper 10 mit einer in axialer Richtung verschiebbaren Schiebemuffe 16 verbunden. Die Schiebemuffe 16 verbindet wahlweise den Synchronkörper 10 mit dem Schaltrad 12 über eine Kupplungsverzahnung 18.

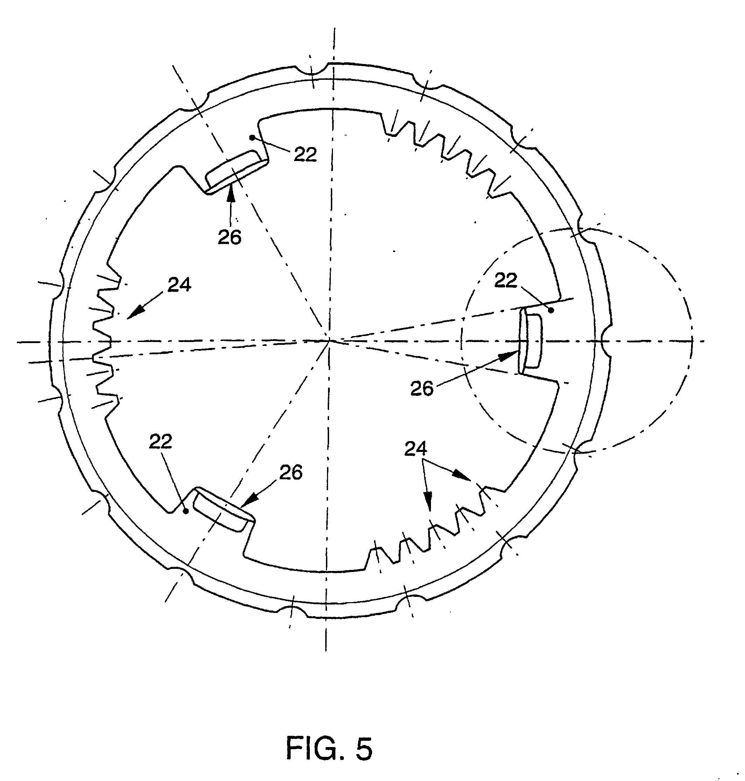

Zum Synchronisieren der Drehzahl von Schiebemuffe 16 und Schaltrad 12, wobei auch die Verzahnungen 14 und 18 in entsprechende Position zueinander gebracht werden, damit die Schiebemuffe 16 mit Ihrer Verzahnung 14 glatt auf das Schaltrad und in die Verzahnung 18 gleiten kann, ist zwischen Schaltrad 12 und Schiebemuffe 16 ein Synchronring 20 angeordnet. Dieser ist in Fig. 5 einzeln dargestellt und umfaßt Lappen 22 und eine Verzahnung 24. Die Lappen 22 haben eine Innenfläche 26, welche bei Bewegung der Schiebemuffe 12 in Richtung Schaltrad zum Einlegen des Ganges auf eine Synchronfeder 28 geschoben werden, wie sich insbesondere aus der Fig. 1 ergibt.

Die Innenflächen 26 der Lappen 22 sind achsparallel zu einer Längsachse 30 des Synchronringes 20 bzw. der gesamten Anordnung ausgebildet. Dadurch entfällt ein zweiter Druckpunkt beim Einlegen des Ganges, da die Synchronfeder 28 lediglich über eine einzige schräge Fläche 32 vor den Innenflächen der Lappen 22 zu Beginn des Einlegens des Ganges geführt werden muß. Dies dient zum Erzeugen einer Vorsynchronisierungskraft bevor die Verzahnung 24 des Synchronringes 20 in die Kupplungsverzahnung 18 des Schaltrades 12 eingreift. Femer dient die Verzahnung 24 des Synchronringes 20 zur Erzeugung der zur Hauptsynchronisierung benötigten Kraft. In einer definierten Stellung treffen Synchronring- und Schaltradabdachung aufeinander. Vor Überwindung dieser Stellung muß eine Kraft aufgebracht werden, damit Gleichlauf zwischen Schiebemuffe, Synchronring und Schaltrad erzielt wird.

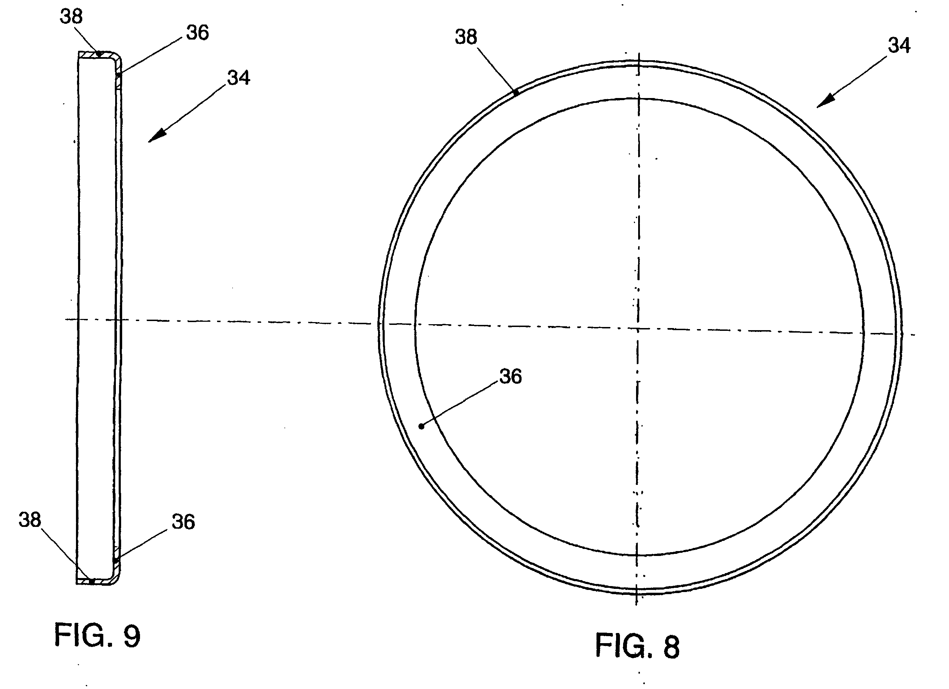

Erfindungsgemäß ist ferner ein Mitnahmemittel in Form eines Mitnahmeringes 34 vorgesehen, welcher in Fig. 8 und 9 im Detail dargestellt ist. Dieser Mitnahmering 34 umfaßt einer Ringfläche 36 und eine Außenfläche 38 mittels derer der Mitnahmering 34 schaltradseitig an der Schiebemuffe 16 derart befestigt ist, daß der Synchronring 20 zwischen der Ringfläche 36 und der Schiebemuffe 16 gehalten ist. Beim Einlegen eines Ganges schiebt die Schiebemuffe 16 den Synchronring 20 gegen die Synchronfeder 28 und auf das Schaltrad 12. Beim Ausrücken des Ganges dagegen sorgt die Ringfläche 36 des Mitnahmeringes 34 dafür, daß der Synchronring 20 von der Schiebemuffe 16 mitgenommen wird und nicht auf dem Schaltrad 12 verbleibt.

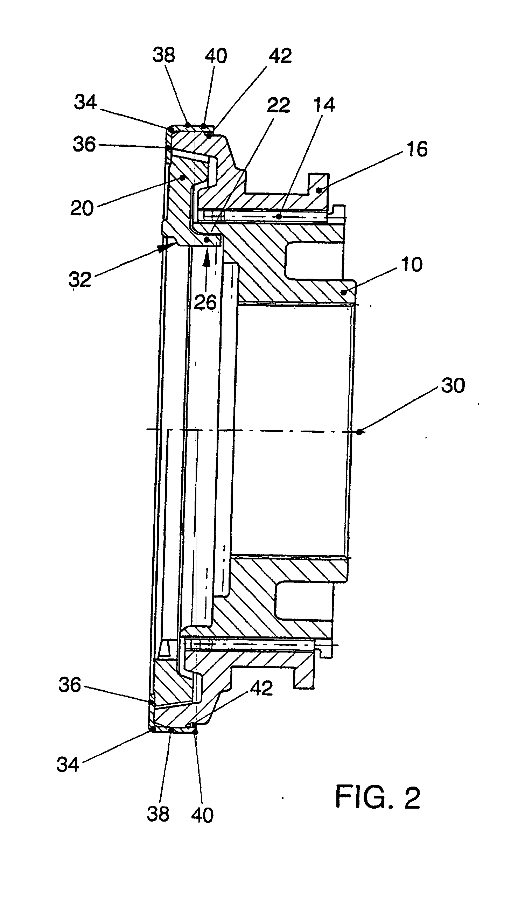

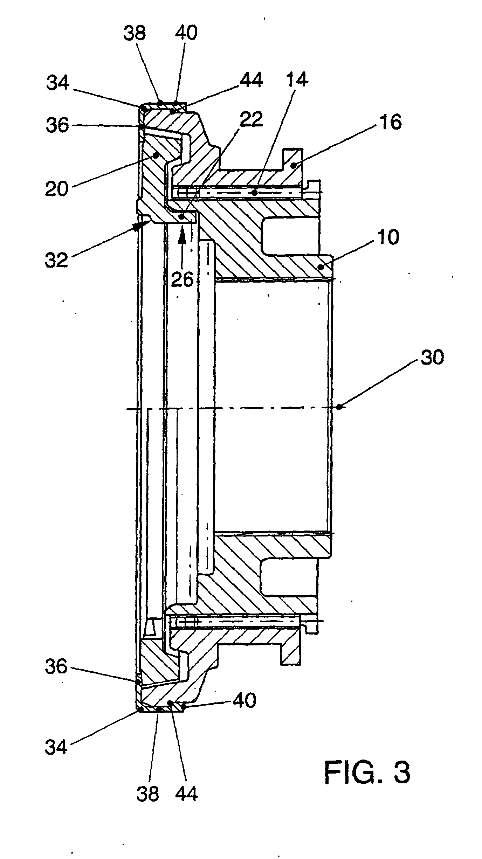

Wie aus Fig. 2 erkennbar, ist ein äußerer Abschnitt 40 der Außenfläche 38 des Mitnahmeringes 34 über eine Nut 42 in der Schiebemuffe 16 gebogen. Hierdurch ist eine Nut-Klemm-Verbindung hergestellt. In einer alternativen Ausführungsform gemäß Fig. 3 ist der äußere Abschnitt 40 mit einer Kante 44 versehen, welche in die Nut 42 greift, so daß eine Nut-Kante-Verbindung hergestellt ist. Hierbei muß der Mitnahmering 34 zur Montage lediglich schaltradseitig auf die Schaltmuffe 16 aufgeschoben werden, wobei zweckmäßigerweise vorher der Synchronring 20 schaltradseitig auf die Schiebemuffe 16 aufgesetzt wird. Wie sich direkt aus den Fig. 2 und 3 ergibt legt die Ringfläche 36 des Mitnahmeringes 34 somit eine axiale Bewegungsfreiheit des Synchronringes 20 bezüglich der Schiebemuffe 16 fest.

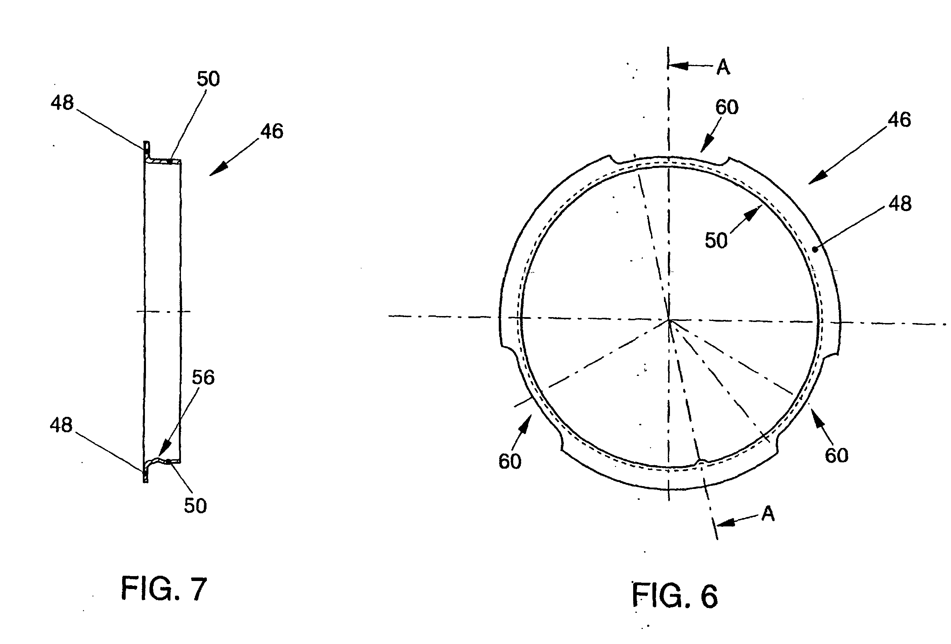

Ferner ist erfindungsgemäß ein Rückhaltemittel in Form eines Halteringes 46 für die Synchronfeder 28 synchronkörperseitig am Schaltrad 12 befestigt. Der Haltering 46 ist in Fig. 6 und 7 im Detail dargestellt und umfaßt eine äußere Ringfläche 48, welche im wesentlichen senkrecht zur Längsachse 30 ausgebildet ist, und eine Innenfläche 50, welche mit einem Außenumfang 52 des Schaltrades 12 verbunden ist. Hierbei greift eine Kante an einem Ende der Innenfläche 50 in eine Kante 58 am Außenumfang 52 des Schaltrades 12. Die äußere Ringfläche 48 bildet für die Synchronfeder 28 in Richtung auf die Schaltmuffe 16 zu einen Anschlag. Auf diese Weise ist ein Abziehen der Synchronfeder 28 von dem Schaltrad 12 durch den Synchronring 20 bzw. den Innenflächen 26 der Lappen 22 verhindert, wenn sich der Synchronring 20 zusammen mit der Schiebemuffe 16 beim Ausrücken des Ganges von dem Schaltrad 12 weg bewegt.

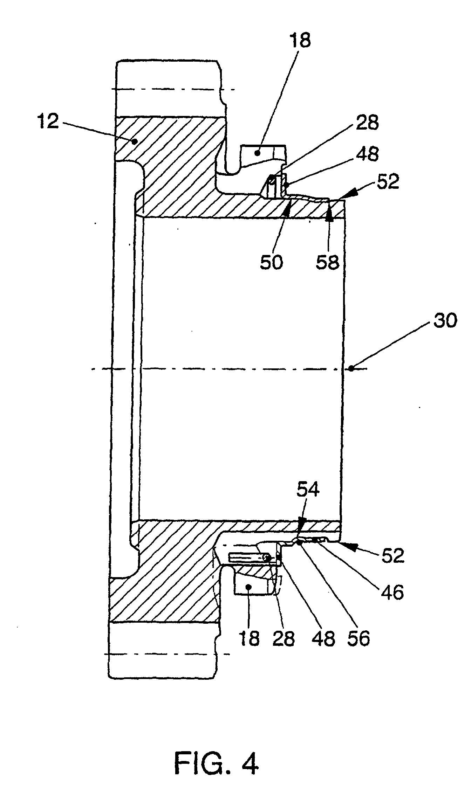

Wie sich ferner insbesondere aus Fig. 4, ergibt, ist am Schaltrad 12 eine Bohrung 53 vorhanden, die bei einer bekannten Schaltungsanordnung zum Einhängen der Synchronfeder 28 dient. Bei der Herstellung der Bohrung 53 wird zwangsläufig eine Nut 54 am Außenumfang 52 des Schaltrades 12 erzeugt. Dieser Nut 54 entsprechend ist am Haltering 46, wie in Fig. 6 und 7 dargestellt, an einer vorbestimmten Stelle der Innenfläche 50 des Halteringes 46 eine Erhebung 56 ausgebildet, welche bei auf das Schaltrad 12 aufgesetztem Haltering 46 in diese Nut 54 greift und so eine drehfest Verbindung zwischen dem Haltering 46 und dem Schaltrad 12 gewährleistet. Dadurch sind in der erfindungsgemäßen Anordnung auch Schalträder 12 herkömmlicher Schaltungsanordnungen ohne Nachbearbeitung verwendbar.

Ferner gewährleistet diese Nut 54, daß der Haltering 46 in einer vordefinierten Position auf dem Schaltrad 12 aufsitzt, da letzeres in der äußeren Ringfläche 48 Ausnehmungen 60 (Fig. 6) aufweist, welche genau mit den Lappen 22 des Synchronringes 20 fluchten müssen, damit dieser auf das Schaltrad 12 schiebbar ist.

### BEZUGSZEICHENLISTE

- 10: Synchronkörper
- 12: Schaltrad
- 14: Verzahnung von Synchronkörper/Schiebemuffe
- 16: Schiebemuffe
- 18: Kupplungsverzahnung von Schaltrad
- 20: Synchronring
- 22: Lappen
- 24: Verzahnung des Synchronringes
- 26: Innenfläche der Lappen
- 28: Synchronfeder
- 30: Längsachse der Anordnung
- 32: schräge Fläche vor Innenfläche der Lappen
- 34: Mitnahmering
- 36: Ringfläche des Mitnahmeringes
- 38: Außenfläche des Mitnahmeringes
- 40: äußerer Abschnitt der Außenfläche des Mitnahmeringes
- 42: Nut in der Schiebemuffe
- 44: Kante am äußeren Abschnitt der Außenfläche des Mitnahmeringes
- 46: Haltering
- 48: äußere Ringfläche des Halteringes
- 50: Innenfläche des Halteringes
- 52: Außenumfang des Schaltrades
- 53: Bohrung
- 54: Nut an Außenumfang des Schaltrades
- 56: Erhebung an Haltering
- 58: Kante an Außenumfang des Schaltrades
- 60: Ausnehmungen

## Patentansprüche

1. Schaltungsanordnung mit Außenkonus-Synchronisierung für einen wahlweise schaltbaren Gang eines Getriebes, insbesondere eines Kraftfahrzeuges, mit einem Schaltrad (12), einem Synchronkörper (10) und einer auf das Schaltrad (12) aufschiebbaren und mit dem Synchronkörper (10) über eine Verzahnung (14) verbundene Schiebemuffe (16), wobei zum Synchronisieren zwischen dem Schaltrad (12) und der Schiebemuffe (16) ein Synchronring (20) mit einer vorbestimmten Anzahl von Lappen (22) und auf dem Schaltrad (12) eine Synchronfeder (28) zum Ausüben einer Vorsynchronisierungskraft auf eine Innenfläche (26) der Lappen (22) angeordnet sind,
**dadurch gekennzeichnet, daß**
die jeweiligen Innenflächen (26) der Lappen (22) koaxial parallel zu einer Längsachse (30) des Synchronringes (20) ausgebildet sind und ferner ein Rückhaltemittel (46) für die Synchronfeder (28) zum Halten der Synchronfeder (28) auf dem Schaltrad (12) sowie ein Mitnahmemittel (34) für den Synchronring (20) zum Halten des Synchronringes (20) an der Schiebemuffe (16) angeordnet sind.

2. Schaltungsanordnung nach Anspruch 1,
**dadurch gekennzeichnet, daß**
das Mitnahmemittel ein Mitnahmering (34) ist, welcher schaltradseitig fest mit der Schiebemuffe (16) verbunden ist und eine Ringfläche (36) aufweist, welche schiebemuffenseitig an einem schaltradseitigen äußeren Rand des Synchronringes (20) derart anschlägt, daß eine axiale Bewegungsfreiheit des Synchronringes (20) zwischen der Ringfläche (36) und der Schiebemuffe (16) festgelegt ist.

3. Schaltungsanordnung nach Anspruch 2,
**dadurch gekennzeichnet, daß**
der Mitnahmering (34) eine senkrecht zur Ringfläche (36) verlaufende Außenfläche (38) aufweist, welche mit einem Außenumfang der Schiebemuffe (16) fest verbunden ist.

4. Schaltungsanordnung nach Anspruch 3,
**dadurch gekennzeichnet, daß**
die feste Verbindung zwischen Außenfläche (38) des Mitnahmeringes (34) und Außenumfang der Schiebemuffe (16) eine Nut-Kante-Verbindung ist, wobei eine Kante (44) an der Außenfläche (38) des Mitnahmeringes (34) in eine Nut(42) am Außenumfang der Schiebemuffe (16) greift.

5. Schaltungsanordnung nach Anspruch 3,
**dadurch gekennzeichnet, daß**
die feste Verbindung zwischen Außenfläche (38) des Mitnahmeringes (34) und dem Außenumfang der Schiebemuffe (16) eine Nut-Klemm-Verbindung ist, wobei ein Ende (40) der Außenfläche (38) des Mitnahmeringes (34) klemmend in eine Nut (42) am Außenumfang der Schiebemuffe (16) gebogen ist.

6. Schaltungsanordnung nach wenigstens einem der Ansprüche 3 bis 5,
**dadurch gekennzeichnet, daß**
der Mitnahmering (34) im Querschnitt L-förmig ausgebildet ist, wobei ein Schenkel die Ringfläche (36) und ein Schenkel die Außenfläche (38) des Mitnahmeringes (34) ausbilden.

7. Schaltungsanordnung nach einem der vorhergehenden Ansprüche,
**dadurch gekennzeichnet, daß**
das Rückhaltemittel für die Synchronfeder (28) ein Haltering (46) ist, wobei eine äußere Ringfläche (48) des Halteringes (46) einen Anschlag für die Synchronfeder (28) in Richtung der Schiebemuffe (16) derart ausbildet, daß eine axiale Bewegungsfreiheit der Synchronfeder (28) zwischen der äußeren Ringfläche (48) des Halteringes (46) und dem Schaltrad (12) festgelegt ist.

8. Schaltungsanordnung nach Anspruch 7,
**dadurch gekennzeichnet, daß**
die äußere Ringfläche (48) senkrecht zu einer Längsachse (30) des Halteringes ausgebildet ist.

9. Schaltungsanordnung nach Anspruch 7 oder 8,
**dadurch gekennzeichnet, daß**
der Haltering (46) schaltmuffenseitig fest mit dem Schaltrad (12) verbunden ist.

10. Schaltungsanordnung nach wenigstens einem der Ansprüche 7 bis 9,
**dadurch gekennzeichnet, daß**
der Haltering (46) eine senkrecht zur äußeren Ringfläche (48) verlaufende Innenfläche (50) aufweist, welche mit einem Außenumfang (52) des Schaltrades (12) fest verbunden ist.

11. Schaltungsanordnung nach Anspruch 10,
**dadurch gekennzeichnet, daß**
die feste Verbindung eine Kante-Kante-Verbindung ist, wobei eine schiebemuffenseitige Endkante der Innenfläche (50) des Halteringes (46) in eine Kante (58) an der Außenfläche (52) des Schaltrades (12) greift.

12. Schaltungsanordnung nach wenigstens einem der Ansprüche 10 oder 11,
**dadurch gekennzeichnet, daß**
in einem vorbestimmten Abschnitt des Umfanges des Halteringes (46) eine Erhebung (56) ausgebildet ist, welche in eine Nut (54) an der Außenfläche des Schaltrades greift.

13. Schaltungsanordnung nach wenigstens einem der Ansprüche 10 bis 12,
**dadurch gekennzeichnet, daß**
der Haltering (46) im Querschnitt L-förmig ausgebildet ist, wobei ein Schenkel die äußere Ringfläche (48) und ein Schenkel die Innenfläche (50) des Halteringes (46) ausbildet.

14. Schaltungsanordnung nach wenigstens einem der vorhergehenden Ansprüche,
**dadurch gekennzeichnet, daß**
der Synchronring (20) drei Lappen (22) aufweist.

15. Schaltungsanordnung nach wenigstens einem der vorhergehenden Ansprüche,
**dadurch gekennzeichnet, daß**
der wahlweise schaltbare Gang ein Rückwärtsgang ist.

## Claims

1. Gearshift arrangement having external conical synchronization for an optionally selectable gear in a gearbox, particularly in a motor vehicle, having a shift wheel (12), a synchronizer hub (10) and a sliding sleeve (16), which can be slid onto the shift wheel (12), and is connected to the synchronizer hub (10) via a toothing (14), a synchronizer ring (20) having a pre-defined number of lugs (22) being arranged between the shift wheel (12) and the sliding sleeve (16) in order to carry out synchronization, and a synchronizer spring (28) for exerting a pre-synchronizing force on an inside surface (26) of the lugs (22) being arranged on the shift wheel (12), **characterized in that** the respective inside surfaces (26) of the lugs (22) are formed coaxially in parallel with a longitudinal axis (30) of the synchronizer ring (20), and **in that** further a retaining device (46) for the synchronizer spring (28) is arranged on the shift wheel (12) in order to hold the synchronizer spring (28), and a driver device (34) for the synchronizer ring (20) is arranged on the sliding sleeve (16) in order to hold the synchronizer ring (20).

2. Gearshift arrangement according to Claim 1, **characterized in that** the driver device is a driver ring (34) which is connected fixedly to the sliding sleeve (16) on the shift wheel side and has a ring surface (36) which bears on the sliding sleeve side against an outer, shift-wheel-side edge of the synchronizer ring (20) in such a way that an axial freedom of motion of the synchronizer ring (20) is defined between the ring surface (36) and the sliding sleeve (16).

3. Gearshift arrangement according to Claim 2, **characterized in that** the driver ring (34) has an outer surface (38) which extends perpendicular to the ring surface (36) and is connected fixedly to an outer circumference of the sliding sleeve (16).

4. Gearshift arrangement according to Claim 3, **characterized in that** the fixed connection between the outer surface (38) of the driver ring (34) and the outer circumference of the sliding sleeve (16) is a groove-to-edge connection, one edge (44) on the outer surface (38) of the driver ring (34) engaging in a groove (42) on the outer circumference of the sliding sleeve (16).

5. Gearshift arrangement according to Claim 3, **characterized in that** the fixed connection between the outer surface (38) of the driver ring (34) and the outer circumference of the sliding sleeve (16) is a clamp-in-groove connection, one end (40) of the outer surface (38) of the driver ring (34) being bent into and exerting a clamping force on a groove (42) on the outer circumference of the sliding sleeve (16).

6. Gearshift arrangement according to at least one of Claims 3 to 5, **characterized in that** the driver ring (34) is formed having an 'L'-shaped cross-section, one leg forming the ring surface (36) and one leg forming the outer surface (38) of the driver ring (34).

7. Gearshift arrangement according to one of the previous Claims, **characterized in that** the retaining means for the synchronizer spring (28) is a retaining ring (46), an outer ring surface (48) of the retaining ring (46) forming a stop for the synchronizer spring (28) in the direction of the sliding sleeve (16) in such a manner that an axial freedom of motion of the synchronizer spring (28) is defined between the outer ring surface (48) of the retaining ring (46) and the shift wheel (12).

8. Gearshift arrangement according to Claim 7, **characterized in that** the outer ring surface (48) is formed perpendicularly to a longitudinal axis (30) of the retaining ring.

9. Gearshift arrangement according to Claim 7 or 8, **characterized in that** on the sliding sleeve side the retaining ring (46) is connected fixedly to the shift wheel (12).

10. Gearshift arrangement according to at least one of Claims 7 to 9, **characterized in that** the retaining ring (46) has an inner surface (50) which runs perpendicularly to the outer ring surface (48), and is connected fixedly to an outer circumference (52) of the shift wheel (12).

11. Gearshift arrangement according to Claim 10, **characterized in that** the fixed connection is an edge-to-edge connection, one end edge on the sliding sleeve side of the inner surface (50) of the retaining ring (46), engaging in an edge (58) on the outer surface (52) of the shift wheel (12).

12. Gearshift arrangement according to at least one of Claims 10 or 11, **characterized in that** an elevation (56) is formed in a pre-defined section of the circumference of the retaining ring (46), which elevation (56) engages in a groove (54) on the outer surface of the shift wheel.

13. Gearshift arrangement according to at least one of Claims 10 to 12, **characterized in that** the retaining ring (46) is formed having an 'L'-shaped cross section, one leg forming the outer ring surface (48) and one leg forming the inner surface (50) of the retaining ring (46).

14. Gearshift arrangement according to at least one of the previous claims, **characterized in that** the synchronizer ring (20) has three lugs (22).

15. Gearshift arrangement according to at least one of the previous claims, **characterized in that** the optionally selectable gear is a reverse gear.

## Revendications

1. Dispositif de changement de vitesses comprenant une synchronisation avec un cône extérieur pour une vitesse d'une boîte de vitesses sélectionnable au choix, en particulier pour un véhicule automobile, comprenant un engrenage de changement de vitesse (12), un corps de synchronisation (10) et un manchon coulissant (16) pouvant glisser sur l'engrenage de changement de vitesse (12) et connecté au corps de synchronisation (10) par le biais d'une denture (14), où, pour la synchronisation entre l'engrenage de changement de vitesse (12) et le manchon coulissant (16), une bague de synchronisation (20) étant prévue avec un nombre prédéterminé de pattes (22) et un ressort de synchronisation (28) étant prévu sur l'engrenage de changement de vitesse (12) pour exercer une force de présynchronisation sur une surface interne (26) des pattes (22),
**caractérisé en ce que**
les faces internes respectives (26) des pattes (22) sont réalisées coaxialement parallèles à un axe longitudinal (30) de la bague de synchronisation (20) et un moyen de retenue (46) pour le ressort de synchronisation (28) destiné à retenir le ressort de synchronisation (28) est disposé sur l'engrenage de changement de vitesse (12) et un moyen d'entraînement (34) pour la bague de synchronisation (20) pour retenir la bague de synchronisation (20) est disposé sur le manchon coulissant (16).

2. Dispositif de changement de vitesses selon la revendication 1,
**caractérisé en ce que**
le moyen d'entraînement est une bague d'entraînement (34) qui est connectée fermement du côté de l'engrenage de changement de vitesse au manchon coulissant (16) et présente une face annulaire (36) qui vient en butée du côté du manchon coulissant contre un bord extérieur de la bague de synchronisation (20) du côté de l'engrenage de changement de vitesse de telle sorte qu'une liberté de mouvement axiale de la bague de synchronisation (20) soit établie entre la face annulaire (36) et le manchon coulissant (16).

3. Dispositif de changement de vitesses selon la revendication 2,
**caractérisé en ce que**
la bague d'entraînement (34) présente une surface extérieure (38) s'étendant perpendiculairement à la face annulaire (36), et qui est fermement connectée à une périphérie extérieure du manchon coulissant (16).

4. Dispositif de changement de vitesses selon la revendication 3,
**caractérisé en ce que**
la connexion fixe entre la surface extérieure (38) de la bague d'entraînement (34) et la périphérie extérieure du manchon coulissant (16) est une liaison par rainure et arête, une arête (44) venant en prise sur la surface extérieure (38) de la bague d'entraînement (34) dans une rainure (42) sur la périphérie extérieure du manchon coulissant (16).

5. Dispositif de changement de vitesses selon la revendication 3,
**caractérisé en ce que**
la connexion fixe entre la surface extérieure (38) de la bague d'entraînement (34) et la périphérie extérieure du manchon coulissant (16) est une connexion par rainure et blocage, une extrémité (40) de la surface extérieure (38) de la bague d'entraînement (34) étant recourbée de manière bloquante dans une rainure (42) sur la périphérie extérieure du manchon coulissant (16).

6. Dispositif de changement de vitesses selon au moins l'une des revendications 3 à 5,
**caractérisé en ce que**
la bague d'entraînement (34) est réalisée en forme de L en section transversale, une branche constituant la face annulaire (36) et une branche constituant la surface extérieure (38) de la bague d'entraînement (34).

7. Dispositif de changement de vitesses selon l'une quelconque des revendications précédentes,
**caractérisé en ce que**
le moyen de retenue pour le ressort de synchronisation (28) est une bague de retenue (46), une face annulaire extérieure (48) de la bague de retenue (46) réalisant une butée pour le ressort de synchronisation (28) dans la direction du manchon coulissant (16) de telle sorte qu'une liberté de mouvement axiale du ressort de synchronisation (28) soit établie entre la face annulaire extérieure (48) de la bague de retenue (46) et l'engrenage de changement de vitesse (12).

8. Dispositif de changement de vitesses selon la revendication 7,
**caractérisé en ce que**
la face annulaire extérieure (48) est réalisée perpendiculairement à un axe longitudinal (30) de la bague de retenue.

9. Dispositif de changement de vitesses selon la revendication 7 ou 8,
**caractérisé en ce que**
la bague de retenue (46) est connectée fermement du côté du manchon coulissant à l'engrenage de changement de vitesse (12).

10. Dispositif de changement de vitesses selon au moins l'une des revendications 7 à 9,
**caractérisé en ce que**
la bague de retenue (46) présente une surface intérieure (50) s'étendant perpendiculairement à la face annulaire extérieure (48), qui est fermement connectée à une périphérie extérieure (52) de l'engrenage de changement de vitesse (12).

11. Dispositif de changement de vitesses selon la revendication 10,
**caractérisé en ce que**
la connexion fixe est une connexion d'arête à arête, une arête terminale de la surface intérieure (50) de la bague de retenue (46) du côté du manchon coulissant venant en prise dans une arête (58) sur la surface extérieure (52) de l'engrenage de changement de vitesse (12).

12. Dispositif de changement de vitesses selon au moins l'une des revendications 10 ou 11,
**caractérisé en ce**
**qu'**un rehaussement (56) est formé dans une portion prédéterminée de la périphérie de la bague de retenue (46), lequel vient en prise dans une rainure (54) sur la surface extérieure de l'engrenage de changement de vitesse.

13. Dispositif de changement de vitesses selon au moins l'une des revendications 10 à 12,
**caractérisé en ce que**
la bague de retenue (46) est réalisée en forme de L en section transversale, une branche constituant la face annulaire extérieure (48) et une branche constituant la face intérieure (50) de la bague de retenue (46).

14. Dispositif de changement de vitesses selon au moins l'une des revendications précédentes,
**caractérisé en ce que**
la bague de synchronisation (20) présente trois pattes (22).

15. Dispositif de changement de vitesses selon au moins l'une des revendications précédentes,
**caractérisé en ce que**
la vitesse sélectionnable au choix est une marche arrière.
